# EUROPEAN PATENT SPECIFICATION

(11) **EP 2 878 588 B1**
(45) Date of publication and mention of the grant of the patent: **22.08.2018**
(21) Application number: 14195171.5
(22) Date of filing: 27.11.2014
(51) Int. Cl.: C04B 28/02, C04B 28/08, C04B 7/345

(54) **CEMENTITIOUS MIXTURE WITH VERY LOW HEAT OF HYDRATION**
ZEMENTMISCHUNG MIT GERINGER HYDRATATIONSWÄRME
MÉLANGE CIMENTAIRE AVEC FAIBLE CHALEUR D'HYDRATATION

(30) Priority: 27.11.2013 IT TO20130963
(43) Date of publication of application: 03.06.2015
(73) Proprietor: Buzzi Unicem S.p.A., 15033 Casale Monferrato (AL) (IT)
(72) Inventor: Canonico, Fulvio, 10138 Torino (IT); Capelli, Livio, 15030 Rosignano Monferrato(Alessandria) (IT); Bianchi, Manuela, 13039 Trino (Vercelli) (IT); Gastaldi, Daniela, 13039 Trino (Vercelli) (IT)
(74) Representative: Gerbino, Angelo

(56) References cited:
- DATABASE WPI Week 200133 Thomson Scientific, London, GB; AN 2001-310732 XP002726405, & JP 2001 064066 A (TAIHEIYO CEMENT CORP) 13 March 2001 (2001-03-13)
- "0008-8846(94)00039-5 HYDRATION CHARACTERISTICS OF ~-C2S IN THE PRESENCE OF SOME POZZOLANIC MATERIALS", Pergamon Cement and Concrete Research, 1 May 1994 (1994-05-01), page 966074, XP055125922, Retrieved from the Internet: URL:http://www.sciencedirect.com/science/a rticle/pii/0008884694900175/pdf?md5=af0cb0 b1b7e1692ae4993c0504800369&pid=1-s2.0-0008 884694900175-main.pdf [retrieved on 2014-06-30]
- GUERRERO A ET AL: "Belite Cement Clinker from Coal Fly Ash of High Ca Content Optimization of Synthesis Parameters", ENVIRONMENTAL SCIENCE & TECHNOLOGY, AMERICAN CHEMICAL SOCIETY, US, vol. 38, 1 January 2004 (2004-01-01), pages 3209-3213, XP002585887, ISSN: 0013-936X, DOI: 10.1021/ES0351589 [retrieved on 2004-05-01]

## Description

This invention relates to the field of cementitious mixtures.

It is known that Portland clinker mainly comprises C3S (> 60%) and C2S (> 20%) and hydrates to form hydrated calcium silicates and a large quantity of Ca(OH)₂ according to the following reaction:

C3S + H₂O → CSH + 2Ca(OH)₂

Although having an important part to play in the protection of reinforcing bars through passivation mechanisms, the Ca(OH)₂ is a filler constituent of the cementitious mortar and does not provide any contribution to the mechanical strength and tenacity of cementitious mortars. In addition to this Ca(OH)₂ is soluble in water and in the case of concrete ageing can therefore undergo dissolution leaching phenomena which render the concrete porous and easily attacked by aggressive chemical agents and CO₂, both of which are potentially damaging to the reinforcing bars.

The development of a cement which makes it possible to maximise the CSH content of the hydrated system and minimise the Ca(OH)₂ content developed in the reaction therefore makes it possible to achieve greater efficiency and utilisation of the clinker and minerals present within it. JP2001064066A discloses a high strength concrete for construction, comprises belite content cement, pozzolana, and water reducing agent and aggregates and has preset high compressive strength at preset water binding material ratio. Sharara, A.M: et al. in "Hydration characteristics of C2S in the presence of some pozzolanic materials", in Cement and Concrete Research, Vol. 24, No. 5, page 966-974 (May 1994) discloses the synthesis of belite from CaCO3 and silica and mixing the obtained beta-belite with 5% pozzolanic material to decrease the amount of liberated Ca(OH)2. Guerrero, A. et al. in "Belite Cement Clinker from Coal Fly Ash of High Ca Content Optimization of Synthesis Parameters", Environmental Science & Technology, American Chemical Society, Vol. 38, pages 3209-3213 (January 2004) discloses the synthesis of belite cement clinker from coal fly ash. In Portland cements it is common to add fly ash, which following a pozzolanic reaction consumes Ca(OH)₂, forming hydrated silicates. However this reaction is never complete because of the excessively high rate of the C3S hydration reaction [E. Sakai et al. / Cement and Concrete Research 35 (2005) 1135-1140]. In addition to this, in these systems the C2S, which is also present in Portland cements, does not take part in the hydration process and the pozzolanic reaction of the fly ash and is therefore greatly retarded.

The object of this invention is to provide a cementitious mixture whose production cycle includes reduced carbon dioxide emissions and which nevertheless has properties that are comparable to those of conventional mixtures based on Portland cement.

In accordance with the invention this object is accomplished thanks to a cementitious mixture containing beta clinker in a quantity of between 25 and 75% by weight and fly ash and/or blast furnace slag in a quantity of between 75 and 25% by weight, the said beta clinker having a β-C2S content of > 65%, a SO₃ content of > 4%, a C3S content of < 10% and a C4A3$ content of < 3%. Of course, all of these latter percentages are also percentages by weight.

This invention therefore provides a cementitious mixture developed in such a way that the pozzolanic reaction of the fly ash only takes place on C2S grains, greatly maximising the hydrated calcium silicate content and greatly minimising the calcium hydroxide content produced during hydration, with significant benefits in terms of energy efficiency (maximisation of CaO present in the powder to form hydrated calcium silicates on hydration), durability and development of mechanical strength. Although not containing significant quantities of C3S, the mixture according to the invention develops high mechanical strength and contrary to expectations allows a reaction which continues even 28 days after hydration to take place.

As will be obvious from the results of the experimental examples provided below, this surprising result is achieved through the presence of SO₃ in a quantity above a minimum threshold value which stabilises the β form of C2S in the mixtures according to the invention, that is the hydraulically active component suitable to develop good mechanical strength following the addition of water. The beta clinker used to produce the cementitious mixture according to the invention can be obtained by calcination in a rotary furnace at a clinker-forming temperature of < 1380°C, and has a heat of clinker formation of < 360 kcal/kg, and a fineness of 3300 g/cm² ± 500 cm².

The above comparatively low clinker-forming temperature helps to reduce CO₂ emissions in the production cycle, alongside the smaller quantity of CaCO₃ used in the mixture generating the beta clinker and the smaller quantity of clinker in the final mixture. Likewise the energy incorporated during the cycle of producing the cementitious mixture according to the invention is reduced.

This mixture has a very low heat of hydration, a carbonatation coefficient similar to that of a Portland cement, and high resistance to aggressive chemicals and chlorides.

In particular the mixture according to the invention develops a heat of hydration of < 180 J/g, measured at 7 days in accordance with standard UNI EN 196-8: 2010. This therefore makes it possible to produce concretes developing very little heat and having significant mechanical and physical performance even though they are obtained from a clinker having a very low C3S content.

The mixture according to the invention may also contain calcium sulfate in a quantity of up to 10% by weight, and/or Portland clinker in a quantity of up to 25% by weight.

This mixture may also comprise any combination of the following further ingredients:
a) a filler in a quantity up to 25% by weight;
b) CaO, MgO, Ca(OH)₂ and/or Mg(OH)₂ in a quantity of up to 10% by weight;
c) an activator based on one or more organic sodium salts, such as for example sodium acetate, sodium oxalate, sodium formate and their mixtures, in a quantity of up to 10% by weight;
d) an activator based on one or more fluorine salts, such as for example sodium fluoride, potassium fluoride, lithium fluoride and their mixtures, in a quantity of up to 10% by weight;
e) an activator based on one or more lithium salts such as for example lithium carbonate, lithium nitrate, lithium sulfate and their mixtures, in a quantity of up to 10% by weight;
f) an activator based on one or more soluble sodium compounds, such as for example sodium hydroxide, sodium silicate, sodium aluminate, sodium thiosulfate and their mixtures, in a quantity of up to 10% by weight;
g) a fluidising additive, for example sodium naphthalene sulfonate, in a quantity of between 0.2 and 2% by weight; and
h) electrostatic filter dusts in a quantity of up to 25% by weight.

The mixture according to the invention can be used for the production of mortars and concretes which can achieve mechanical strengths measured on a normal mortar according to standard EN 196-1 of 22.5 MPa at 28 days, 42.5 MPa at 90 days and > 52.5 MPa at 180 days.

Further advantages and characteristics of this invention will be apparent from the following embodiments provided by way of a non-limiting example in which all the percentages are to be regarded as being by weight unless indicated otherwise.

### EXAMPLES

Table I below shows the compositions of two cementitious mixtures according to the invention (indicated by A and B), together with data relating to the development of their corresponding mechanical strengths over time. Table I also shows the compositions of two comparison cementitious mixtures (indicated by C and D) containing a belite clinker having a SO₃ concentration of 1.7% and a C2S concentration of 72%, in which the percentage of β-C2S is 17%. Conversely in the beta clinkers in mixtures A and B the SO₃ concentration is 4.1% and that of β-C2S is 67 %.

**TABLE I**

| **Composition** | **A** | **B** | **C** | **D** |
|---|---|---|---|---|
| Beta clinker (%) | 75% | 50% | | |
| Fly ash (%) | 25% | 50% | 25% | 50% |
| Belite clinker | | | 75% | 50% |
| Water/cement ratio | 0.5 | 0.45 | 0.5 | 0.5 |
| Flow (%) | 80 | 80 | 70 | 65 |
| 28 day compression strength (MPa) | 35 | 25 | 3.5 | 2.0 |
| 90 day compression strength (MPa) | 50 | 40 | 4.5 | 3.5 |
| 180 day compression strength (MPa) | 60 | 60 | 6.5 | 4.5 |
| Heat of hydration (UNI EN 196-8: 2010) (J/g) | 166 | 109 | | |
| Rate of carbonatation (mm.d^{0.5}, where mm = carbonatation depth and d = time in days) | < 0.2 | < 0.2 | | |
| Resistance to chlorides at 90 days (NT Build 492) | <10x10⁻¹² m²/s | <10 x10⁻¹² m²/s | | |
| Ca(OH)₂ developed during hydration (determined by means of thermogravimetric analyses on cement mortars) | 6% | 3% | | |

As will be seen from the data shown in Table I, the mixture according to the invention is decidedly advantageous in that it develops good mechanical strength despite being substantially free of C3S. The comparatively high SO₃ concentration stabilising the β-C2S, which is the hydraulically active component, is critical to the development of these strength values; comparison mixtures C and D in which the clinker has a low SO₃ content and therefore a low β-C2S content in fact exhibit mechanical strength values which are approximately an order of magnitude smaller.

It has therefore been experimentally confirmed that this invention unexpectedly overcomes the technical problem of providing a cementitious mixture which develops satisfactory mechanical strength values after hydration, although giving rise to comparatively small carbon dioxide emissions in its production.

Of course, without altering the principle of the invention, details of implementation and embodiments may be varied greatly with respect to what has been described purely by way of example without thereby going beyond the scope of the invention as defined in the appended claims.

## Claims

1. Cementitious mixture comprising beta clinker in an amount in the range 25 to 75 % by weight, and fly ashes and/or blast furnace slag in an amount in the range 75 to 25 % by weight, said beta clinker having a β-C2S content > 65%, a SO₃ content > 4%, a C3S content < 10% and a C4A3$ content < 3%.

2. Cementitious mixture according to claim 1, further comprising calcium sulfate in an amount up to 10 % by weight.

3. Cementitious mixture according to any one of the previous claims, further comprising a limestone filler in an amount up to 25 % by weight.

4. Cementitious mixture according to any one of the previous claims, further comprising Portland clinker in an amount up to 25 % by weight.

## Patentansprüche

1. Zementmischung, aufweisend Beta-Klinker in einer Menge im Bereich von 25 bis 75 Gewichtsprozent und Flugasche und/oder Hochofenschlacke in einer Menge im Bereich von 75 bis 25 Gewichtsprozent, wobei die Beta-Klinker einen β-C2S-Gehalt > 65 %, einen SO₃-Gehalt > 4 %, einen C3S-Gehalt < 10 % und einen C4A3$-Gehalt < 3 % aufweisen.

2. Zementmischung nach Anspruch 1, weiter aufweisend Calciumsulfat in einer Menge bis zu 10 Gewichtsprozent.

3. Zementmischung nach einem der vorhergehenden Ansprüche, weiter aufweisend einen Kalksteinfüller in einer Menge bis zu 25 Gewichtsprozent.

4. Zementmischung nach einem der vorhergehenden Ansprüche, weiter aufweisend Portlandklinker in einer Menge bis zu 25 Gewichtsprozent.

## Revendications

1. Mélange cimentaire comprenant un clinker bêta en une quantité située dans la plage allant de 25 à 75 % en poids, et des cendres volantes et/ou un laitier de haut-fourneau en une quantité située dans la plage allant de 75 à 25 % en poids, ledit clinker bêta présentant une teneur en β-C2S > 65 %, une teneur en SO₃ > 4 %, une teneur en C3S < 10 % et une teneur en C4A3$ < 3 %.

2. Mélange cimentaire selon la revendication 1, comprenant en outre du sulfate de calcium en une quantité allant jusqu'à 10 % en poids.

3. Mélange cimentaire selon l'une quelconque des revendications précédentes, comprenant en outre une matière de remplissage de type calcaire en une quantité allant jusqu'à 25 % en poids.

4. Mélange cimentaire selon l'une quelconque des revendications précédentes, comprenant en outre un clinker Portland en une quantité allant jusqu'à 25 % en poids.
